# EUROPEAN PATENT SPECIFICATION

(11) **EP 0 819 498 B1**
(45) Date of publication and mention of the grant of the patent: **23.12.1998**
(21) Application number: 97305374.7
(22) Date of filing: 18.07.1997
(51) Int. Cl.: B23K 26/00

(54) **Method and apparatus for laser ablation**
Verfahren und Vorrichtung zur Laserablation
Procédé et dispositif pour ablation par laser

(30) Priority: 20.07.1996 GB 9615301
(43) Date of publication of application: 21.01.1998
(73) Proprietor: BRITISH AEROSPACE PUBLIC LIMITED COMPANY, Farnborough, Hants. GU14 6YU (GB)
(72) Inventor: Wiliams, Stewart Wynn, British Aerospace plc, Filton, Bristol BS12 7QW (GB)
(74) Representative: Rooney, Paul Blaise

(56) References cited:
- PATENT ABSTRACTS OF JAPAN vol. 012, no. 109 (M-682), 8 April 1988 & JP 62 238088 A (MITSUBISHI HEAVY IND LTD), 19 October 1987,

## Description

This invention relates to a method and apparatus for laser ablating sheet-like material suitable particularly, but not exclusively, for drilling small holes in thin metal sheets.

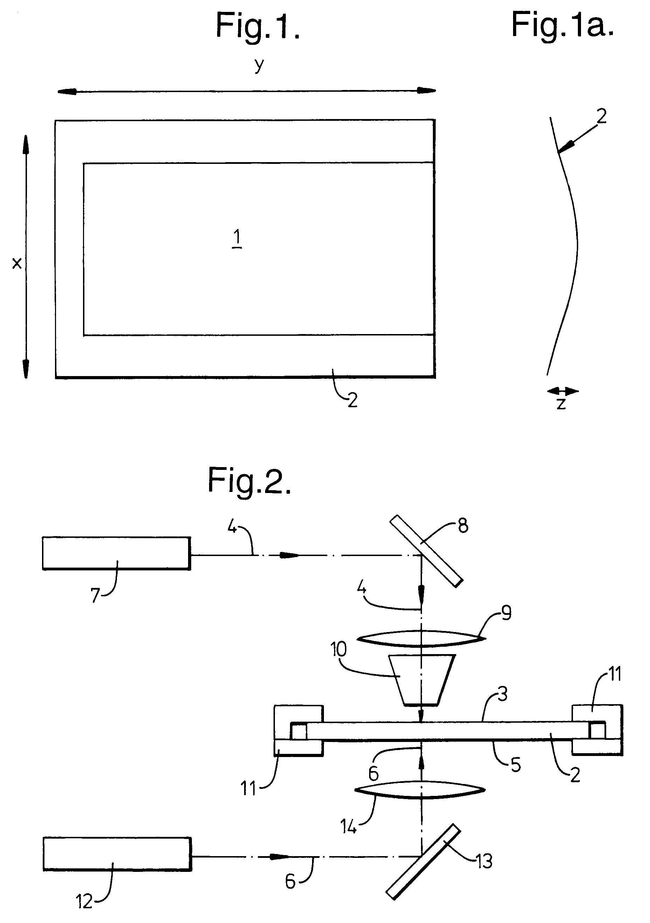

One of the main problems associated with processing materials by laser can be distortion of the component being processed due to the thermal fields present. This problem is particularly acute when processing thin sheet-like materials or when using large amounts of heat. A specific example where there is a major problem is in drilling small holes in titanium sheet. Typically the material is lmm thick and with a hole size of 50µm and a pitch of 500µm the required laser energy input is in the range of 500 to 4000 J/m. Using a pulsed laser with a repetition rate of 50Hz this is equivalent to scanning a 50W power beam at 1.5 metres per minute. Scanning such a beam on a thin sheet of metal causes the sheet to bend towards the laser beam with the angle of bend depending on the laser power, scan speed and spot size as well as on the material thickness and thermal properties. The bend angle varies from fractions of a degree up to about one degree per laser pass. For example Figure 1 of the accompanying drawings shows a panel of sheet-like material, namely titanium metal, having dimensions of 0.5m in the X direction and lm in the Y direction. The central area referenced 1 represents the area which has been drilled with the drilling being carried out by scanning the pulsed laser beam in the Y direction and then incrementing in the X direction. The drilled area 1 is 400mm wide. The result of the drilling process is illustrated by profile shown in the Z direction (not to scale) in Figure la of the accompanying drawings. The drilling process in the area 1 of the panel 2 has resulted in the 0.9mm thick titanium sheet bowing with a height of 30mm. This corresponds to a bend angle of about 0.017 degrees per laser scan along the Y direction.

Such bending is a major problem for the drilling example discussed because the depth of field for the optimum drilling position is extremely small, typically less than 100µm for best quality holes. The panels that are to be drilled can be up to 2 metres square so that the amount of distortion produced by these small bend angles is very significant. Conventionally it is necessary to prevent such bending by the use of strong restraining tooling which is difficult to apply over a large area.

JP-A-62 238 088 discloses an example of a restraining tooling used when drilling a plate. After drilling, the perforated plate is put into an annealing furnace to relieve the internal strain. Thus the quality of the holes produced in large panels in this way is poorer than is desirable.

There is thus a need for a generally improved method and apparatus for laser ablating sheet-like material which at least minimises the foregoing distortion problems.

According to a first aspect of the present invention there is provided a method for laser ablating sheet-like material including the steps of applying to one surface of the sheet-like material a first beam of laser energy such as to ablate material therefrom, and applying to a surface of the sheet material opposite to said one surface, at a suitable position thereon, a second beam of laser energy such as to heat the material of the opposite surface sufficiently to counteract bending of the sheet-like material in response to the first laser beam, substantially without ablating the sheet-like material.

Preferably the first beam of laser energy is a pulsed beam.

Conveniently the second beam of laser energy is a substantially continuous wave beam having a power in the range of from 100 to 200 Watts.

According to a second aspect of the present invention there is provided apparatus for laser ablating sheet-like material, including means for applying, to one surface of the sheet-like material, a first beam of laser energy for ablating material therefrom, and means for applying to a surface of the sheet-like material opposite to said one surface, at a suitable position on the opposite surface, a second beam of laser energy for heating the material of the opposite surface sufficiently to counteract bending of the sheet-like material in response to the first laser beam, substantiating without ablating the sheet-like material.

Preferably the means for applying the first beam of laser energy includes a pulsed laser source.

Conveniently the pulsed laser source is a Nd-YAG laser.

Advantageously the means for applying the second beam of laser energy includes a substantially continuous wave laser source.

Preferably the substantially continuous wave laser source is a CO₂ laser or a Nd-YAG laser or a diode laser.

For a better understanding of the present invention, and to show how the same may be carried into effect, reference will now be made, by way of example, to the accompanying drawings, in which;
Figure 1 is a plan view of a titanium sheet treated according to a method and using apparatus not according to the present invention.
Figure 1a is an edge view of the panel of Figure 1 showing the distortion shape produced by treatment with a method and apparatus not according to the invention,
Figure 2 is a diagrammatic view of apparatus according to a first embodiment of the present invention for use with the method of the present invention, and
Figure 3 is a diagrammatic view of a second embodiment of apparatus according to the present invention for use with the method of the present invention.

The present invention provides a method for laser ablating sheet-like material such as sheet titanium panels previously described in respect of Figure 1 of the accompanying drawings. The panel may be substantially planar as illustrated or may be preformed into a shape. The method includes the steps of applying to one surface 3 of the panel 2 a first beam 4 of laser energy such as to ablate material therefrom and applying to a surface 5 opposite to the surface 3 at a suitable position thereon a second beam 6 of laser energy such as to heat the material of the surface 5 sufficiently to counteract bending of the panel 2 in response to the first laser beam 4, substantially without ablating the surface 5. Preferably the first beam 4 of laser energy is a pulsed beam and the second beam 6 of laser energy is a substantially continuous wave beam having a power in the range of from 100 to 200 Watts.

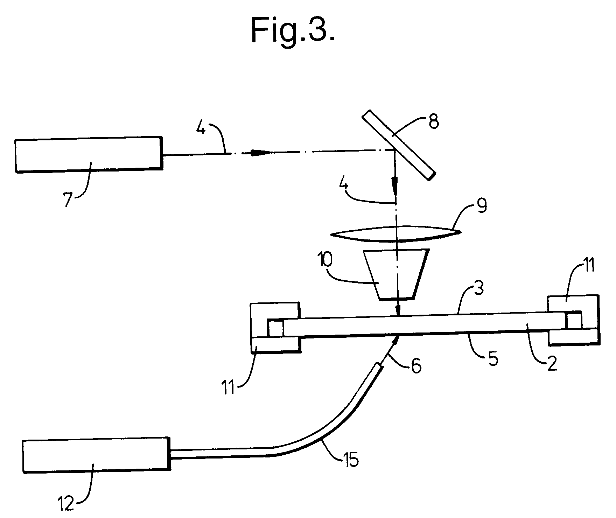

The above method may be applied using apparatus according to the present invention such as the embodiments illustrated in Figures 2 and 3 of the accompanying drawings. In the first embodiment of the present invention illustrated in Figure 2 of the accompanying drawings, the first beam 4 is provided by a laser source 7 which preferably is a pulsed Nd-YAG laser suitable for drilling holes in 1mm thick titanium panels 2. Typical operating parameters for such a laser are a pulse energy of one Joule, a pulse width of 200 µs and a repetition rate of 50Hz. The beam 4 from laser 7 is directed to the surface 3 of the panel 2 by a turning mirror or mirrors 8. The beam reflected by the mirror 8 passes through a focusing lens 9 and preferably via an assist gassed nozzle 10 to the surface 3 of the panel 2. The panel 2 is mounted in an open frame xy table 11 in any convenient manner to index the panel 2 as required.

The apparatus of Figure 2 also includes a second laser source 12 operable to provide a substantially continuous wave beam 6 and conveniently in the form of a substantially continuous wave CO₂ laser. This provides a beam 6 suitable for providing heating effect to the surface 5 of the panel 2 opposite to the point of drilling of the laser beam 4 on the surface 3 to give an equivalent bending effect to that of the laser 7 but in the opposite direction and without actually ablating or melting any material from the panel 2. In this way the bending action typically produced by the laser 7 is counteracted and a typical output power which is suitable for the laser 12 is in the range of from 100 to 200 Watts. In a similar manner to the laser 7 the beam 6 is directed to the surface 5 of the panel 2 by apparatus components including a further turning mirror 13 and a focusing lens 14.

To achieve the same, but opposite, bending effect as the drilling laser 7, but without effecting the panel 2, the bending laser 12 has different operating parameters to that of the drilling laser 7. As previously stated the bend angle depends on the laser power, spot size and scan speed and possibly also the laser pulse shape. It is therefore relatively simple to arrange for the drilling laser 7 and the bending laser 12 to have different parameters but the same size effect as far as bend angle is concerned. For example the two lasers may have different average powers, different spot sizes and different pulse shapes as the only requirement for the laser 12 is to provide heating on the surface 5 of the panel 2 and thereby an equivalent but opposite bending effect. This enables the panel 2 to be held in a simple fixture that stays in focus throughout the drilling so improving the whole quality across the panel 2.

The embodiment of Figure 3 is basically similar to that of Figure 2 and like components have been given like reference numerals and will not be further described in detail. However, in this embodiment the laser beam 6 is provided from the laser 12 via an optical fibre 15 and the laser 12 is a substantially continuous wave Nd-YAG laser with an average power in the range of from 100 to 200 Watts. Alternatively the laser 12 could be a substantially continuous wave diode laser.

## Claims

1. A method for laser ablating sheet-like material including the steps of applying to one surface (3) of the sheet-like material (2) a first beam (4) of laser energy such as to ablate material therefrom, and applying to a surface (5) of the sheet material opposite to said one surface (3), at a suitable position thereon, a second beam (6) of laser energy such as to heat the material of the opposite surface (5) sufficiently to counteract bending of the sheet-like material in response to the first laser beam, substantially without ablating the sheet-like material.

2. A method according to claim 1, in which the first beam (4) of laser energy is a pulsed beam.

3. A method according to claim 1, in which the second beam (5) of laser energy is a substantially continuous wave beam having a power in the range of from 100 to 200 Watts.

4. Apparatus for laser ablating sheet-like material, including means for applying to one surface (3) of the sheet-like material (2), a first beam (4) of laser energy for ablating material therefrom, and means for applying to a surface (5) of the sheet-like material opposite to said one surface, at a suitable position on the opposite surface, a second beam (6) of laser energy for heating the material of the opposite surface (5) sufficiently to counteract bending of the sheet-like material in response to the first laser beam (4), substantially without ablating the sheet-like material.

5. Apparatus according to claim 4, wherein the means for applying the first beam (4) of laser energy includes a pulsed laser source (7).

6. Apparatus according to claim 5, wherein the pulsed laser is a Nd-YAG laser.

7. Apparatus according to any one of claims 4 to 6, wherein the means for applying the second beam (6) of laser energy includes a substantially continuous wave laser source.

8. Apparatus according to claim 7, wherein the substantially continuous wave laser source is a CO₂ laser or a Nd-YAG laser or a diode laser.

## Patentansprüche

1. Verfahren zur Laser-Ablation blechartigen Materials mit den folgenden Schritten: Es wird auf der einen Oberfläche (3) des blechartigen Materials (2) ein erster Strahl (4) von Laserenergie derart aufgebracht, daß Material hiervon abgetragen wird; es wird auf einer Oberfläche (5) des blechartigen Materials, die der einen Oberfläche (3) gegenüberliegt, an einer geeigneten Stelle ein zweiter Strahl (6) von Laserenergie derart aufgebracht, daß das Material auf der gegenüberliegenden Oberfläche (5) genügend weit erhitzt wird, um der Biegung entgegenzuwirken, der das blechartige Material gemäß dem Aufbringen des ersten Laserstrahls ausgesetzt war, und zwar im wesentlichen ohne das blechartige Material abzutragen.

2. Verfahren nach Anspruch 1,
bei welchem der erste Strahl (4) von Laserenergie ein gepulster Strahl ist.

3. Verfahren nach Anspruch 1,
bei welchem der zweite Strahl (5) von Laserenergie ein Dauer-Laserstrahl mit einer Leistung im Bereich zwischen 100 und 200 Watt ist.

4. Vorrichtung zur Laserablation blechartigen Materials, mit den folgenden Merkmalen: es sind Mittel vorgesehen, um auf einer Oberfläche (3) des blechartigen Materials (2) einen ersten Strahl (4) mit Laserenergie aufzubringen, um von dieser Oberfläche Material abzutragen, und es sind Mittel vorgesehen, um auf eine Oberfläche (5) des blechartigen Materials, die der einen Oberfläche gegenüberliegt, an einer geeigneten Stelle der gegenüberliegenden Oberfläche, einen zweiten Strahl (6) mit Laserenergie aufzubringen, um das Material auf der gegenüberliegenden Oberfläche (5) soweit zu erhitzen, daß der Biegung des blechartigen Materials entgegengewirkt wird, die durch den ersten Laserstrahl (4) verursacht wird, wobei diese Erhitzung im wesentlichen ohne Abtragen des blechartigen Materials erfolgt.

5. Vorrichtung nach Anspruch 4,
bei welcher die Mittel zum Aufbringen des ersten Strahls (4) mit Laserenergie eine gepulste Laserquelle (7) aufweisen.

6. Vorrichtung nach Anspruch 5,
bei welcher der gepulste Laser ein Nd-YAG-Laser ist.

7. Vorrichtung nach einem der Ansprüche 4 bis 6,
bei welcher die Mittel zum Aufbringen des zweiten Strahls (6) mit Laserenergie eine Dauer-Laserquelle aufweisen.

8. Vorrichtung nach Anspruch 7,
bei welcher die Dauer-Laserquelle ein CO₂-Laser oder ein Nd-YAG-Laser oder ein Dioden-Laser ist.

## Revendications

1. Procédé d'ablation par laser d'un matériau analogue à une tôle, incluant les étapes consistant à appliquer sur une première surface (3) du matériau analogue à une tôle (2) un premier faisceau (4) porteur d'énergie laser de manière, par exemple, à ôter de celle-ci du matériau par ablation, et à appliquer à une surface (5) du matériau analogue à une tôle, qui est opposée à la dite première surface (3), à une position appropriée sur celle-ci, un second faisceau (6) porteur d'énergie laser de manière, par exemple, à chauffer le matériau de la surface opposée (5) de façon à contrebalancer suffisamment la flexion du matériau analogue à une tôle en réponse au premier faisceau laser, sensiblement sans opérer une ablation du matériau analogue à une tôle.

2. Procédé selon la revendication 1, dans lequel le premier faisceau (4) porteur d'énergie laser est un faisceau pulsé.

3. Procédé selon la revendication 1, dans lequel le second faisceau (6) porteur d'énergie laser est un faisceau à onde sensiblement entretenue développant une puissance comprise dans la plage qui s'étend entre 100 et 200 watt.

4. Appareil pour l'ablation par laser d'un matériau analogue à une tôle, incluant des moyens pour appliquer sur une première surface (3) du matériau analogue à une tôle (2) un premier faisceau (4) porteur d'énergie laser de manière à ôter de celle-ci du matériau par ablation, et des moyens pour appliquer à une surface (5) du matériau analogue à une tôle, qui est opposée à la dite première surface, à une position appropriée sur la surface opposée, un second faisceau (6) porteur d'énergie laser de manière, par exemple, à chauffer le matériau de la surface opposée (5) de façon à contrebalancer suffisamment la flexion du matériau analogue à une tôle en réponse au premier faisceau laser, sensiblement sans opérer une ablation du matériau analogue à une tôle.

5. Appareil selon la revendication 4, dans lequel les moyens pour appliquer le premier faisceau (4) porteur d'énergie laser incluent une source de laser pulsé (7).

6. Appareil selon la revendication 5, dans lequel le laser pulsé est un laser YAG.

7. Appareil selon l'une quelconque des revendications 4 à 6, dans lequel les moyens pour appliquer le second faisceau (6) porteur d'énergie laser est un faisceau à onde sensiblement entretenue.

8. Appareil selon la revendication 7, dans lequel la source de laser à onde sensiblement entretenue est un laser CO2 ou un laser YAG, ou encore un laser à diode.
